# EUROPEAN PATENT APPLICATION

(11) **EP 0 755 143 A2**
(43) Date of publication of application: **22.01.1997**
(21) Application number: 96201953.5
(22) Date of filing: 11.07.1996
(51) Int. Cl.: H04M 3/42, H04M 7/00, H04Q 3/00

(54) **Network server**

(30) Priority: 17.07.1995 NL 1000823
(71) Applicant: Koninklijke PTT Nederland N.V., 9726 AE Groningen (NL)
(72) Inventor: Kappetijn, Cornelis, 4761 ZH Zevenbergen (NL)
(74) Representative: van Bommel, Jan Peter

(57) **Abstract**

Sophisticated services cannot too easily be realised in a sizable public telephone network. Albeit that the ESP offers better prospects for this, the available building blocks are limited. In addition, the ESP is managed by the network operator. By means of servers not associated with the public network or the ESP, interconnection and other services may be offered.

## Description

### BACKGROUND OF THE INVENTION

The invention relates to a network server for a public telecommunications network.

For introducing new network services, according to the prior art there are, in the main, three options available:
1. modifying (extending) the software and/or hardware in the telecommunications network itself. This requires a great deal of time and effort due to the large size of the network. A complication here is that the network subsystems (such as exchanges) are of several makes. Realising a new service therefore requires the (partly joint) efforts of various competing manufacturers;
2. making use of an "0800 platform" (Enhanced Service Platform or ESP), again by modifying the software and/or hardware. In itself, this is a better option to realise new services. Only the software and/or hardware in the ESP exchange --which is located outside the actual telecommunications network-- need be modified. A drawback is that only a limited supply of building blocks is available for this kind of exchange, as a result of which the freedom of offering services is limited as well. A further drawback is that the ESP exchange is managed by the network operator, as a result of which it is not possible for others to offer the same or alternative enhanced services;
3. making use of the options of the Intelligent Network (IN). In itself, this development offers good prospects, however such a network architecture is not available in the short term. Furthermore it is true here as well that for the development of new services one largely depends on the availability of the required building blocks. Finally, it is also true that only the network operator is entitled to make use of this option, to the exclusion of third parties who will want to offer certain services in competition with the network operator.

### SUMMARY OF THE INVENTION

The invention is based on the insight that, for offering new services to subscribers of the public telecommunications network, successful use may be made of flexible hardware and/or software primarily developed, as a matter of fact, for relatively small-scale applications, sometimes referred to as Computer Telephony Integration (CTI), such as Voice-response Controlled Private Branch Exchanges. As a result, services currently already being used, e.g., in company telecommunications networks and further sophisticated services may be offered, without the problems stated above, to subscribers of the public network.

The present invention comprises, in short, a server which itself is not part of the public telecommunications network, but is connected to that network by way of a number of subscriber connections, with subscribers of the public telecommunications network being capable of dialling said server in order to make use of sophisticated options offered by said server. As a server, there may be considered a PC or PC network provided with telecommunications boards or, as a larger configuration, a PBX with a computer interface.

By applying such non-network server it can be achieved that the "time-to-market" of new network services may be short and that they may be developed at low cost. The user-friendliness and adaptability, too, are attractive.

The sophisticated services considered are, e.g., putting through, follow-me, boss-secretary switching, message delivery, automatic call distribution etc. Furthermore there is the option, after a period of absence to automatically phone back callers, to screen callers, e.g., by way of an additional access number etc.

Servers which may be dialled by subscribers for the exclusive purpose of receiving information, such as on-line data bases or telephone information services, do not fall under the present invention; neither do voice mail and voice forward service, which are currently already being offered by ESP exchanges. Neither, of course, do PBXs fall under the invention; after all, these provide the connection between subscribers on the public network and subscribers on the PBX network, or among PBX subscribers themselves.

In the event of the server according to the present invention, it always concerns connections - although the server is located outside the public network - among subscribers on the public network themselves.

Here, one of the options is to put through such connections on the basis of parameters previously stored in the server. Such parameters then relate to the accessibility of B subscribers with whom A subscribers wish to make a connection.

Such parameters in the server, however, may also comprise data on (A) subscribers who, if such a subscriber makes a call, are made available by the server to the B subscriber called. Such data can then be automatically processed by the B subscriber, which saves the calling A subscriber the trouble of having to cite the data during the call. By way of example, the postal code and number of the house may be used as characteristic parameter of the calling subscriber, since in many administrations of, e.g., insurance and other institutions, these serve as identification parameter.

Below, the invention is explained in more detail on the basis of several examples.

### EXEMPLARY EMBODIMENTS

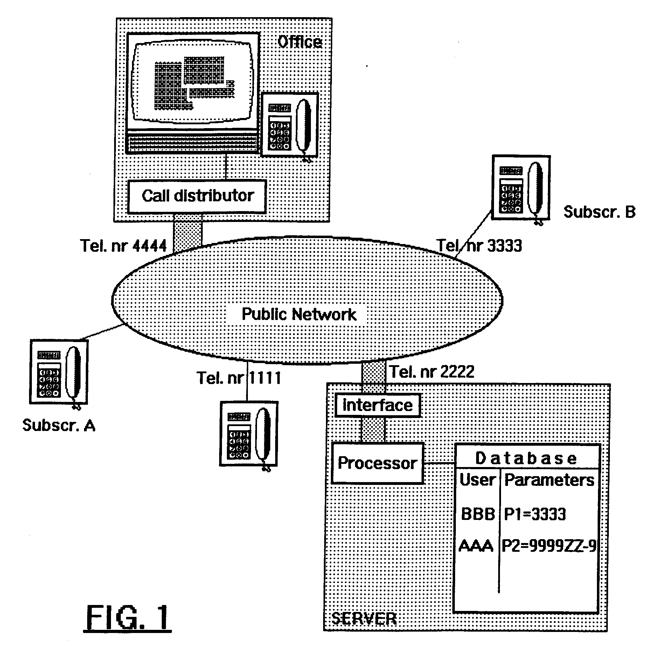

FIG. 1 schematically shows an exemplary embodiment of a server according to the invention. The server consists of a processor connected by way of an interface, by way of a sufficient number of connections, to the public telephone network (in general telecommunications network). The processor can be dialled, by way of the interface, by subscribers of the public network and can also call subscribers itself. The processor is connected to a data base associated with the server, in which subscriber parameters may be stored.

Two examples in which use is made of the server, are discussed below.
I. As mentioned above, the server may be used to increase the accessibility (by telephone). Suppose that subscriber B, who has an ambulatory function, would like to be accessible by telephone. Subscriber B then informs his relations of his "golden number", i.e., the telephone number of the server, 2222, including his user number within the server. If subscriber B is usually accessible by way of telephone number 1111, in his absence he may refer - e.g., by way of an answering device - to telephone number 2222 of the server. In addition, calls to number 1111 may be put through, by means of *21, to the golden number 2222. Subscriber B may also mention the golden number 2222, together with his user number BBB, on his business cards etc. If subscriber B is "travelling", he informs the server of the place where he can be reached, by means of passing that telephone number, referred to in the Figure as parameter P1 - e.g., telephone number 3333 - to the server. By the way, this may also be the number of B's radiotelephone. If a subscriber A wants to call subscriber B, he may first call the "normal" number of B, 1111, and subsequently, after it has turned out that B is absent, the golden number 2222. A may also call the golden number directly. After A has entered the user number of B, BBB, invited to do so by a Voice Response Unit of the processor, the parameter P1, 3333, is read out of the data base. The subscriber A is informed, again by way of the Voice Response Unit, that he will be put through to the telephone number of B, 3333, after which the processor, by way of the interface, dials telephone number 3333 and connects the line used for this purpose through to the line with which subscriber A is connected [?]. Upon termination of the connections between A and the processor, and/or B and the processor, both connections are disconnected. Options such as repeated dialling or phoning back if the telephone number called, 3333, is temporarily not answering and the like, are easy to program into the processor. Options of this type, which currently are already standard in PABX environments, may now also be offered - making use of a server according to the invention - for the public network without the network having to be modified drastically for this purpose. It should be noted that the public telephone numbers may be used as user numbers: if in the Figure, 1111 is the "normal" telephone number of B, that same number may be used as user number in the data base (instead of BBB).
II. In the second place, the use of the server is discussed for automatically passing on, to a called subscriber ("B subscriber"), data on the calling subscriber ("A subscriber"). In the Figure, the B subscriber is represented by an office in which incoming telephone calls are offered to work stations by way of a Call Distributor. Such work stations comprise a data terminal, hereinafter referred to as PC, and a telephone set. On the PC, data on the calling client - after a client has made himself known by telephone to an operator - may be called up by the operator. In doing so, clients may often confine themselves to citing their postal code and the number of their house. Currently, the server may be used for passing on, on behalf of the A subscriber to the B subscriber, personal or business information, e.g., postal code and number of the house. Here, the operation is as follows. Suppose that subscriber A wants to call the office connected to telephone number 4444, with data of A having to be automatically passed on to the office called. Subscriber A then does not call telephone number 4444 directly, but 2222 of the server instead. Under the assumption that A has already passed on his data to the data base of the server (stored under the user number of A) at an earlier point in time, such data - after the server has been dialled by A and A has entered his user number and the telephone number to be dialled, 4444 - is automatically passed on to the office. This data may be used by the PC to look up the further data of the calling client and to display it on the screen, already at the start of the call between the client and the operator.

It should be noted that it is also possible that some parameters (P3, P4, ...) are not set by subscribers, but by the system manager of the server or --automatically-- by the processor.

### REFERENCES

None.

## Claims

1. Telecommunications server, comprising an interface member for exchanging signals with a public telecommunications network, as well as a processor for carrying out instructions given by subscribers of the telecommunications network by way of that telecommunications network, characterised by means for receiving and recording parameters, associated with subscribers of the public telecommunications network, with the parameters offered being recorded per subscriber under user numbers allocated to those subscribers, with the processor - after a subscriber makes a connection with the telecommunications server and has entered the user number under which the parameters have been recorded - making a connection by way of the public telecommunications network, making use of the parameters recorded in the processor under that entered user number.

2. Telecommunications server according to claim 1, characterised in that a first subscriber - after making a connection with the telecommunications server and after entering a user number and an identification code - may offer parameters to the processor, which are recorded in said processor under said user number, which parameters relate to the accessibility of said subscriber by way of the telecommunications network, with the processor - after a second subscriber has made a connection with the telecommunications server and has entered the user number of the first subscriber - makes a connection call at the public telecommunications network in accordance with the accessibility parameters recorded in the processor by the first subscriber.

3. Telecommunications server according to claim 1, characterised in that a subscriber - after making a connection with the telecommunications server and after entering a user number and an identification code - may offer parameters to the processor, which are recorded in said processor under said user number, which parameters relate to personal or business data of said subscriber, with the processor - after the subscriber once again makes a connection with the telecommunications server - makes a connection call at the public telecommunications network in accordance with the parameters recorded in the processor.
